# DEMANDE DE BREVET EUROPEEN

(11) **EP 4 843 865 A1**
(43) Date de publication de la demande: **25.11.2026**
(21) Numéro de dépôt: 26162421.7
(22) Date de dépôt: 04.03.2026
(51) Int. Cl.: B62B 3/14

(54) **CHARIOT À MAIN COMPORTANT DES ROUES PIVOTANTES**

(30) Priorité: 05.03.2025 FR 2502207
(71) Demandeur: Gallee, Bernard, 22100 Dinan (FR)
(72) Inventeur: Gallee, Bernard, 22100 Dinan (FR)
(74) Mandataire: Cabinet Le Guen Maillet

(57) **Abrégé**

L'invention concerne un chariot à main (1) comportant un châssis (10) ayant une extrémité avant (101) présentant au moins un ensemble (11a) de roue avant pivotante, une extrémité arrière (102) comporte deux ensembles (11b) de roues arrière pivotantes et un axe médian longitudinal (103). Chaque ensemble (11a, 11b) de roue pivotante comporte :
- un support de roue (111) portant un axe de roue (112) ;
- une roue (113) portée par ledit support de roue ; et
- un axe de support (12) fixé audit support de roue et audit châssis.

Selon l'invention, ledit axe de support des roues avant présente un axe longitudinal (121) qui s'étend verticalement tandis que ledit axe de support (12) des roues arrière est incliné vers l'avant et vers l'axe médian horizontal.

De cette manière, 1a maniabilité et 1a tenue d'une trajectoire sont améliorées.

## Description

### DOMAINE TECHNIQUE

La présente invention concerne le domaine des chariots à main, connus sous les noms de chariots de courses ou chariots de supermarchés. En particulier, l'invention concerne un chariot à main comportant deux roues arrière pivotantes et moins une roue avant pivotante.

### ÉTAT DE LA TECHNIQUE ANTÉRIEURE

Dans le domaine des chariots à main destinés à être généralement utilisés dans les magasins de grande distribution, on connait principalement deux types de chariots : les chariots à quatre roues pivotantes (autrement dit roues directionnelles) qui pivotent chacune autour d'un axe globalement vertical et les chariots qui comportent deux roues arrière fixes et deux roues avant pivotantes qui pivotent chacune autour d'un axe globalement vertical également.

Les chariots à quatre roues pivotantes ont pour objectif de favoriser la maniabilité du chariot, mais cela s'effectue au détriment de la tenue d'une trajectoire. En effet, ce type de chariot est simple à manœuvrer dans les petits espaces mais lorsqu'il s'agit de tenir une trajectoire, par exemple sur un parking présentant un léger dévers, ces chariots sont très difficiles à manœuvrer et nécessitent une force importante pour les maintenir en ligne.

A contrario, les chariots qui comportent deux roues arrière fixes et deux roues avant pivotantes améliorent la tenue de la trajectoire. En effet, les roues arrière fixes empêchent la dérive du chariot, notamment sur une surface en dévers, mais elles réduisent également la maniabilité du chariot car il est nécessaire d'appliquer une force relativement importante pour dévier le centre de gravité du chariot.

Les inconvénients précités pour les deux types de chariots sont en outre amplifiés lorsque les chariots sont chargés.

Il existe donc un besoin de fournir une solution qui permette d'améliorer la maniabilité des chariots à main dans toutes les circonstances.

### EXPOSÉ DE L'INVENTION

Un objet de la présente invention est de proposer une solution permettant d'améliorer la maniabilité des chariots à main.

À cet effet, est proposé un chariot à main comportant un châssis ayant une extrémité avant, une extrémité arrière et un axe médian longitudinal, où l'extrémité avant comporte au moins un ensemble de roue avant pivotante et où l'extrémité arrière comporte deux ensembles de roues arrière pivotantes, chaque ensemble de roue pivotante comportant :
- un support de roue portant un axe de roue, ledit axe de roue s'étendant globalement horizontalement ;
- une roue portée par ledit support de roue et pivotant autour dudit axe de roue ; et
- un axe de support fixé d'une part audit support de roue et d'autre part audit châssis, où ledit support de roue est monté pivotant autour dudit axe de support ou inversement.

Selon l'invention, pour ledit au moins un ensemble de roue avant pivotante, ledit axe de support présente un axe longitudinal qui s'étend perpendiculairement à un plan horizontal comportant ledit axe médian longitudinal.

Selon l'invention encore, pour chacun desdits ensembles de roue arrière pivotante, ledit axe de support présente un axe longitudinal qui s'étend de manière inclinée vers l'avant dudit chariot et ledit axe longitudinal dudit axe de support s'étend dans un plan longitudinal incliné vers l'axe médian longitudinal.

Selon un aspect particulier de l'invention, ledit axe longitudinal dudit axe de support s'étend de manière inclinée vers l'avant dudit chariot selon un angle α compris entre 1 et 15°.

De préférence, ledit axe longitudinal dudit axe de support s'étend de manière inclinée vers l'avant dudit chariot selon un angle α compris entre 1 et 5°.

Selon un autre aspect particulier de l'invention, ledit plan longitudinal dudit axe de support est incliné vers l'axe longitudinal selon un angle β compris entre 5 et 45°.

De préférence, ledit plan longitudinal dudit axe de support est incliné vers l'axe longitudinal selon un angle β compris entre 15 et 25°.

Selon un mode de réalisation particulier de l'invention, ledit châssis comporte, au niveau de chaque ensemble de roue arrière pivotante, une patte de support, où ledit axe de support est fixé d'une part audit support de roue et d'autre part à ladite patte de support et où ladite patte de support présente les mêmes inclinaisons que ledit axe de support.

Selon un autre mode de réalisation particulier de l'invention, ledit châssis comporte, au niveau de chaque ensemble de roue arrière pivotante, une patte de support, où ledit axe de support est fixé d'une part audit support de roue et d'autre part à ladite patte de support, où ladite patte de support présente un axe longitudinal qui s'étend globalement verticalement et où ladite patte de support s'étend dans un plan longitudinal s'étendant globalement parallèlement à l'axe longitudinal dudit châssis, et où ledit axe de support comporte des moyens d'inclinaison configurés pour incliner ledit axe longitudinal dudit axe de support par rapport à ladite patte de support dudit châssis.

Selon cet autre mode de réalisation particulier de l'invention, lesdits moyens d'inclinaison comportent une rondelle biseauté disposée autour dudit axe de support, entre ledit support de roue et ladite patte de support.

### BRÈVE DESCRIPTION DES DESSINS

Les caractéristiques de l'invention mentionnées ci-dessus, ainsi que d'autres, apparaîtront plus clairement à la lecture de la description suivante de deux exemples de réalisation, ladite description étant faite en relation avec les dessins joints, parmi lesquels :
[Fig. 1] est une vue de côté d'un chariot à main selon l'invention ;
[Fig. 2] est une vue de face du chariot à main de la Fig. 1 ;
[Fig. 3] est une vue de côté et en coupe d'un exemple particulier de réalisation d'une roue arrière pivotante pour un chariot à main selon l'invention ;
[Fig. 4] est une vue schématique et de dessus d'un chariot à main selon l'invention en position d'arrêt ;
[Fig. 5] est une vue schématique et de dessus d'un chariot à main selon l'invention lors d'un déplacement selon une trajectoire rectiligne ;
[Fig. 6] est une vue schématique et de dessus d'un chariot à main selon l'invention lors d'un déplacement selon une trajectoire suivant une large courbe ; et
[Fig. 7] est une vue schématique et de dessus d'un chariot à main selon l'invention lors d'un déplacement selon une trajectoire suivant une courbe serrée.

### EXPOSÉ DÉTAILLÉ DE DEUX EXEMPLES DE RÉALISATION

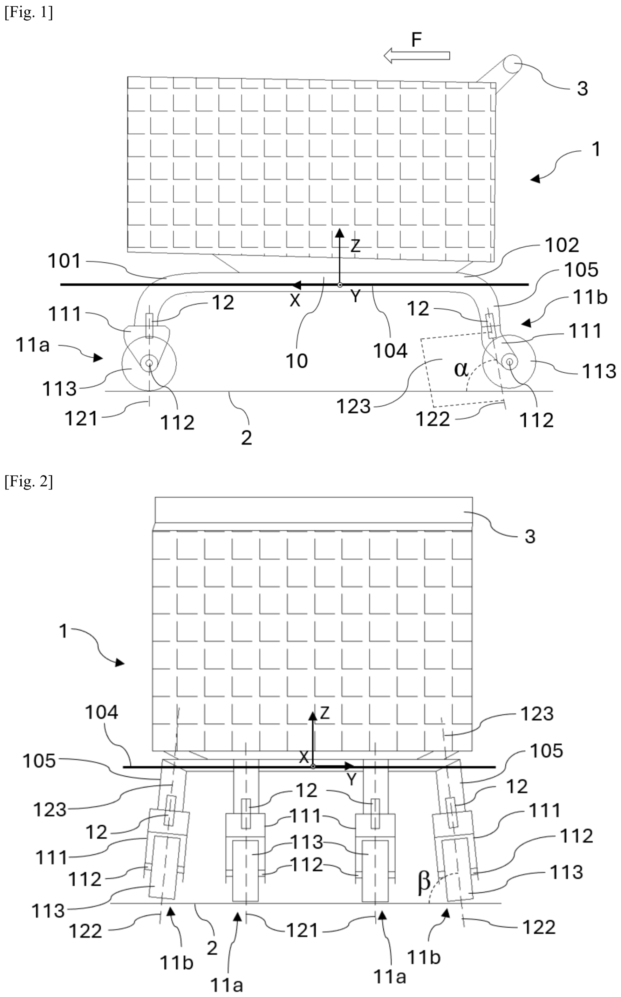

La Fig. 1 illustre un chariot à main 1 comportant un châssis 10 ayant une extrémité avant 101, une extrémité arrière 102 et un axe médian longitudinal 103.

Dans la description qui suit, les termes relatifs à une position sont pris en référence à un chariot à main reposant sur un sol 2, c'est-à-dire comme il est représenté sur la Fig. 1 et les positions « avant » et « arrière » sont prises par rapport à l'avant et l'arrière du chariot à main 1 et par rapport à la direction d'avancement F du chariot à main lorsque ce dernier est poussé au moyen de la poignée 3.

Dans la description qui suit, et par convention, on appelle X la direction longitudinale du chariot à main 1 qui est horizontale lorsque le chariot à main 1 repose sur un sol 2 horizontal, on appelle Y la direction transversale qui est horizontale lorsque le chariot à main 1 repose sur un sol 2 horizontal, et Z la direction verticale qui est verticale lorsque le chariot à main 1 repose sur un sol 2 horizontal, ces trois directions X, Y et Z étant orthogonales entre elles. Dans les exemples de réalisation de l'invention présentés ici, le chariot à main 1 présente un plan médian vertical XZ et un plan médian horizontal XY. Comme illustré, le chariot à main 1 comporte un axe médian longitudinal 103 qui s'étend globalement parallèlement à l'axe X. Comme illustré sur l'ensemble des figures, l'extrémité avant 101 du chariot à main 1 comporte au moins un ensemble 11a de roue avant pivotante. En particulier, dans les exemples illustrés, l'extrémité avant 101 comporte deux ensembles 11a de roue avant pivotante qui sont alignés selon un axe perpendiculaire à l'axe médian longitudinal 103 du chariot à main 1. On comprend que le chariot à main 1 selon l'invention pourrait ne mettre en œuvre qu'un seul ensemble 11a de roue avant pivotante sans s'écarter du principe de l'invention.

L'extrémité arrière 102 comporte quant à elle deux ensembles 11b de roue arrière pivotante. Comme précédemment, les deux ensembles 11b de roue arrière pivotante sont alignés selon un axe perpendiculaire à l'axe médian longitudinal 103 du chariot à main 1 et présentent, dans cet exemple, un écartement plus élevé entre eux comparé aux ensembles 11a de roue avant pivotante.

La structure des ensembles de roue avant 11a et de roue arrière 11b est globalement identique. Ainsi, chaque ensemble 11a, 11b de roue pivotante comporte :
- un support de roue 111 qui porte un axe de roue 112, l'axe de roue 112 s'étendant globalement horizontalement (c'est-à-dire globalement dans le plan horizontal XY);
- une roue 113 portée par le support de roue 111 et qui pivote/tourne autour de l'axe de roue 112 ; et
- un axe de support 12 qui est fixé d'une part au support de roue 111 et d'autre part au châssis 10, le support de roue 111 étant monté pivotant autour de l'axe de support 12 ou inversement.

Selon l'invention, pour chaque ensemble 11a de roue avant pivotante, l'axe de support 12 présente un axe longitudinal 121 qui s'étend perpendiculairement à un plan horizontal 104 qui comporte l'axe médian longitudinal 103. En d'autres termes, l'axe longitudinal 121 de l'axe de support 12 s'étend perpendiculairement au plan horizontal XY, c'est-à-dire parallèlement à l'axe vertical Z.

En outre, pour chaque ensemble 11b de roue arrière pivotante, l'axe de support 12 présente un axe longitudinal 122 qui s'étend de manière inclinée vers l'avant du chariot à main 1. De plus, l'axe longitudinal 122 de l'axe de support 12 s'étend dans un plan longitudinal 123 incliné vers l'axe médian longitudinal 103. En d'autres termes, l'axe longitudinal 122 de l'axe de support 12 s'étend dans un plan longitudinal 123 qui est incliné vers le plan médian vertical XZ, c'est-à-dire vers l'intérieur du chariot à main 1.

De préférence, les plans longitudinaux 123 des ensembles 11b de roue arrière pivotante convergent l'un vers l'autre, c'est-à-dire vers l'avant du chariot à main 1.

Une telle mise en œuvre permet d'améliorer la maniabilité du chariot à main 1 tout en facilitant la tenue d'une trajectoire, et cela même sur un sol en dévers. En effet, il a été observé qu'une masse tourne de manière aisée et naturelle autour de son centre de gravité G. Dans le cas d'un chariot à main 1, le centre de gravité G se trouve globalement au tiers de la distance entre les roues arrière et les roues avant, que le chariot à main 1 soit vide ou chargé. Ainsi, ce sont toujours les roues arrière qui sont plus chargées que les roues avant. Par conséquent, il en résulte qu'il est préférable d'agir sur les roues arrière pour obtenir une réactivité transversale optimale de sorte à améliorer la tenue d'une trajectoire tout en donnant à ces dernières une fonction antidérive.

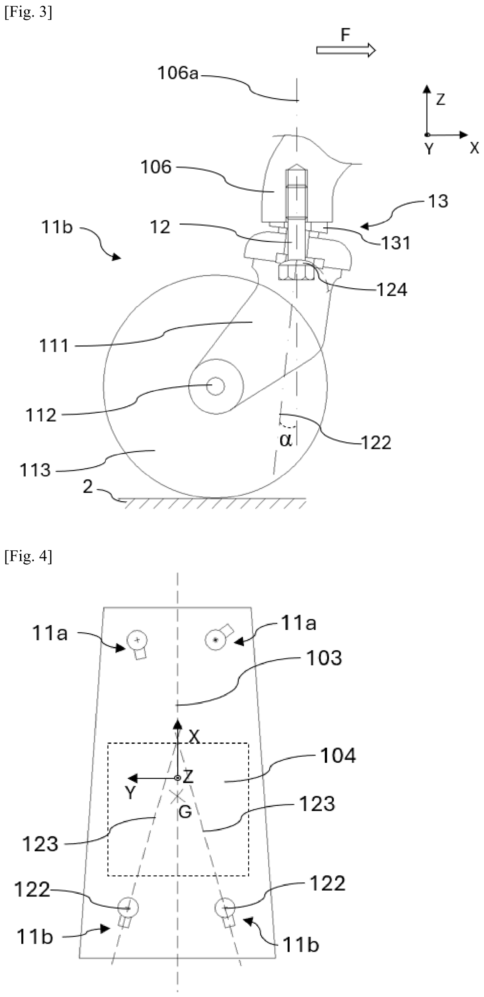

En inclinant l'axe de support 12 des roues arrière vers l'avant du chariot à main 1 conformément à l'invention, cela permet de rendre les roues arrière progressivement rebelles à quitter leur position neutre (illustrée sur la Fig. 4), ce qui fournit un angle de chasse aux roues arrière (autrement dit elles ne s'étendent pas parallèlement entres elles ni parallèlement à l'axe longitudinal 103 du chariot à main 1) améliorant ainsi la tenue d'une trajectoire. En effet, une force plus importante qu'un simple dévers est nécessaire pour faire dévier le chariot à main 1 de sa trajectoire.

De plus, lors des déplacements en marche avant et selon une trajectoire rectiligne, comme illustré à la Fig. 4, les roues arrière s'orientent d'office selon une direction parallèle ce qui leur donne une prédisposition à intervenir de façon efficace à toute sollicitation (c'est-à-dire force) transversale pour effectuer un virage par exemple.

Il est à noter que grâce à cette inclinaison particulière de l'axe de support 12 des roues arrière vers l'avant du chariot à main 1, une légère élévation des roues arrière (par exemple comprise entre 3 et 10 mm) par rapport aux roues avant est obtenue, ce qui fournit une réaction progressive des roues arrière aux sollicitations transversales et améliore ainsi la maniabilité du chariot à main 1.

En outre, l'inclinaison des axes de support 12 en direction de l'axe médian longitudinal 103 de sorte à ce que les axes de support 12 s'étendent dans des plans convergeant vers l'avant du chariot à main 1 permet d'améliorer encore la maniabilité du chariot à main 1 puisque cela facilite la déviation du centre de gravité G. En effet, lors d'un virage, la roue arrière extérieure au virage est la plus sollicitée. Avec cette inclinaison particulière de l'axe de support 12, l'effet réactif de la roue arrière extérieure est amplifié de façon à faciliter, par réaction, la propulsion à l'opposé des roues avant rendant ainsi la prise de virage plus aisée.

Enfin, étant donné que les roues avant sont plus éloignées du centre de gravité G que les roues arrière, il est nécessaire que leur axe de support s'étende globalement verticalement afin que les roues avant restent le plus neutre possible pour faciliter la rotation du chariot à main 1 sur lui-même.

Comme illustré sur les Figs. 1 et 3, l'axe longitudinal 122 de l'axe de support 12 des ensembles 11b de roues arrière s'étend de manière inclinée vers l'avant du chariot 1 selon un angle α compris entre 1 et 15°.

De préférence, l'angle α est compris entre 1 et 5°. Une telle inclinaison permet d'obtenir une maniabilité optimale du chariot à main 1.

Comme illustré sur les Figs. 2 et 4 notamment, le plan longitudinal 123 de l'axe de support 12 est incliné vers l'axe médian longitudinal 103 selon un angle β compris entre 5 et 45°.

De préférence, l'angle β est compris entre 15 et 25°. Une telle inclinaison participe à l'obtention d'une maniabilité optimale du chariot à main 1 et à l'amélioration de la tenue de la trajectoire du chariot à main 1.

La combinaison des angles α et β permet donc d'incliner naturellement le plan longitudinal des roues vers l'intérieur du chariot (c'est-à-dire en direction de l'avant et de l'axe longitudinal 103 du chariot).

Comme illustré sur la Fig. 1, qui représente un premier exemple de réalisation de l'invention, le châssis 10 comporte, au niveau de chaque ensemble 11b de roue arrière pivotante, une patte de support 105. L'axe de support 12 est fixé d'une part au support de roue 111 et d'autre part à la patte de support 105. La patte de support 105, qui fait ici partie intégrante du châssis 10, présente les mêmes inclinaisons que l'axe de support 12.

En d'autres termes, ce premier exemple de réalisation illustre comment l'invention peut être mise en œuvre dès la conception/fabrication du chariot à main 1. En effet, il suffit de prévoir une inclinaison vers l'avant et vers l'axe médian longitudinal 103 de l'axe longitudinal de la patte de support 105 du châssis 10 de sorte que l'axe longitudinal de la patte de support 105 soit globalement coaxial avec l'axe longitudinal 121 de l'axe de support 12.

La Fig. 3 représente un deuxième mode de réalisation illustrant comment un chariot à main de l'art antérieur peut être modifié pour intégrer la solution de l'invention. Plus particulièrement, le châssis 10 comporte, au niveau de chaque ensemble 11b de roue arrière pivotante, une patte de support 106. L'axe de support 12 est fixé d'une part au support de roue 111 et d'autre part à la patte de support 106. La patte de support 106 présente ici classiquement un axe longitudinal 106a qui s'étend globalement verticalement (c'est-à-dire perpendiculairement au plan horizontal XY). La patte de support 106 s'étend en outre dans un plan longitudinal qui s'étend globalement parallèlement à l'axe longitudinal 103 du châssis 10. En d'autres termes, l'axe longitudinal 106a de la patte de support est vertical, comme dans les chariots à main de l'art antérieur.

Par adapter les chariots à main de l'art antérieur à l'invention, l'axe de support 12 comporte ici des moyens d'inclinaison 13 qui sont configurés pour incliner l'axe longitudinal 122 de l'axe de support 12 par rapport à la patte de support 106 du châssis 10. En d'autres termes, ces moyens d'inclinaison 13 permettent d'incliner l'axe longitudinal 122 de l'axe de support 12 vers l'avant du chariot 1. Ces moyens d'inclinaison permettent en outre d'incliner le plan longitudinal 123 dans lequel s'étend l'axe longitudinal 122 de l'axe de support vers l'axe médian longitudinal 103.

Pour ce faire, les moyens d'inclinaison 13 comportent au moins une rondelle biseautée 131 disposée autour de l'axe de support 12, entre le support de roue 111 et la patte de support 106. Cette rondelle biseautée 131 comporte donc une surface inclinée qui permet d'engendrer une inclinaison de l'axe longitudinal 122 de l'axe de support 12 selon les angles α et β décrits précédemment.

Dans l'exemple particulier illustré sur la Fig. 3, lors de l'assemblage de la roue 11b sur le support 106 par un axe de support 12 et une rondelle biseautée 131, il est préférable de contrôler la position de la rondelle biseautée 131 pour obtenir l'inclinaison souhaitée décrite ci-dessus.

Afin d'assurer une liaison mécanique optimale, il est préférable que le contact entre le support de roue 111 et le dessous de la tête de l'axe de support 12 se fasse par l'intermédiaire d'une forme 124 globalement sphérique, ou à tout le moins conique. De plus, il est nécessaire que l'alésage axial du support de roue 111 recevant l'axe de support 12 comporte un jeu de montage suffisant permettant l'inclinaison du support de roue 111.

Dans cet exemple, et afin de permettre l'inclinaison du support de roue 111, l'axe de support 12 se présente sous la forme d'une vis de fixation dont une première portion (adjacente à la tête de vis) est décolletée (c'est-à-dire ne présentant pas de filetage). Cette première portion s'étend globalement de la tête de vis jusqu'au début de la patte de support 106 du châssis 10. En d'autres termes, cette première portion correspond à la portion de la vis de fixation recevant le support de roue 111 et la rondelle biseautée 131.

La Fig. 4 représente le chariot à main 1 selon l'invention dans une vue de dessus et en position immobile. Étant donné le poids du chariot à main 1 (et de sa charge éventuelle), les roues arrière se positionnent naturellement en V selon des angles qui convergent vers l'avant du chariot à main 1. Cette orientation naturelle des roues arrière est engendrée par l'inclinaison de l'axe longitudinal 122 de l'axe de support 12 des ensembles 11b de roue arrière pivotante. Cela permet au chariot à main 1 de rester immobile sur le sol, même si un dévers est présent. De cette manière, dans la position d'arrêt du chariot à main 1, ce dernier reste strictement immobile et facilite par exemple le transfert de la charge disposée dans le chariot à main 1 vers un coffre de voiture. De plus, cette orientation en V des roues arrière facilite le mouvement de recul du chariot à main 1 en incitant les roues arrière à pivoter vers l'extérieur.

Les roues avant étant neutres de par leur axe de support s'étendant verticalement, elles peuvent prendre une position quelconque.

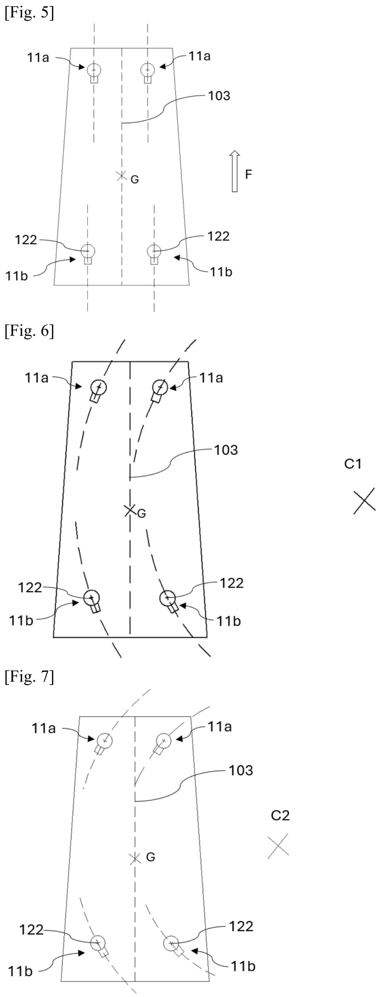

La Fig. 5 illustre un chariot à main selon l'invention lors d'un déplacement suivant une trajectoire rectiligne. Les roues sont alors toutes dirigées parallèlement à l'axe médian longitudinal 103 du chariot à main 1 de sorte à faciliter le déplacement de ce dernier.

La Fig. 6 représente un cas où un virage large est appliqué au chariot à main 1. Le large virage s'effectue autour du centre C1 qui est positionné globalement en face et à distance du centre de gravité G du chariot à main 1, puisque c'est le centre de gravité qu'il est nécessaire de dévier.

Dans ce type de virage, on remarque que la roue arrière gauche a pris une position quasiment opposée à sa position neutre par rapport à l'axe médian longitudinal 103. En d'autres termes, la roue arrière gauche est maintenant orientée vers l'avant et l'extérieur du chariot à main 1, ce qui lui donne une réactivité améliorée puisque la force centrifuge subie par le chariot à main 1 lui sera totalement appliquée.

Dans ce type de virage, la roue arrière droite a tendance à se rapprocher de sa position neutre (comme sur la Fig. 4) puisqu'elle a peu d'influence sur la déviation du centre de gravité.

La Fig. 7 représente un cas où un virage serré est appliqué au chariot à main 1. Un tel virage est par exemple effectué en bout d'allée d'un magasin. Le virage s'effectue autour du centre C2 qui est de nouveau positionné globalement en face et à une plus grande distance du centre de gravité G du chariot à main 1.

Dans ce type de virage, on remarque que la roue arrière gauche a pris une position encore plus éloignée de sa position neutre par rapport à l'axe médian longitudinal 103, ce qui lui donne une réactivité encore plus importante que dans le virage large représenté sur la Fig. 6.

Dans ce type de virage, la roue arrière droite a tendance, dans un premier temps, à se rapprocher de sa position neutre (comme sur la Fig. 4) puisqu'elle a peu d'influence sur la déviation du centre de gravité, puis à s'orienter au-delà de sa position neutre pour devenir réactive et suppléer progressivement la roue arrière gauche, améliorant ainsi la maniabilité du chariot à main 1.

## Revendications

1. Chariot à main (1) comportant un châssis (10) ayant une extrémité avant (101), une extrémité arrière (102) et un axe médian longitudinal (103), où l'extrémité avant (101) comporte au moins un ensemble (11a) de roue avant pivotante et où l'extrémité arrière (102) comporte deux ensembles (11b) de roues arrière pivotantes, chaque ensemble (11a, 11b) de roue pivotante comportant :
- un support de roue (111) portant un axe de roue (112), ledit axe de roue (112) s'étendant globalement horizontalement ;
- une roue (113) portée par ledit support de roue (111) et pivotant autour dudit axe de roue (112) ; et
- un axe de support (12) fixé d'une part audit support de roue (111) et d'autre part audit châssis (10), où ledit support de roue (111) est monté pivotant autour dudit axe de support (12) ou inversement ;
**caractérisé en ce que**, pour ledit au moins un ensemble (11a) de roue avant pivotante, ledit axe de support (12) présente un axe longitudinal (121) qui s'étend perpendiculairement à un plan horizontal (104) comportant ledit axe médian longitudinal (103) ;
et **en ce que**, pour chacun desdits ensembles (11b) de roue arrière pivotante, ledit axe de support (12) présente un axe longitudinal (122) qui s'étend de manière inclinée vers l'avant dudit chariot (1) et **en ce que** ledit axe longitudinal (122) dudit axe de support (12) s'étend dans un plan longitudinal (123) incliné vers l'axe médian longitudinal (103).

2. Chariot à main (1) selon la revendication 1, caractérisé en ce ledit axe longitudinal (122) dudit axe de support (12) s'étend de manière inclinée vers l'avant dudit chariot (1) selon un angle (α) compris entre 1 et 15°.

3. Chariot à main (1) selon la revendication 2, caractérisé en ce ledit axe longitudinal (122) dudit axe de support (12) s'étend de manière inclinée vers l'avant dudit chariot (1) selon un angle (α) compris entre 1 et 5°.

4. Chariot à main (1) selon l'une quelconque des revendications 1 à 3, caractérisé en ce ledit plan longitudinal (123) dudit axe de support (12) est incliné vers l'axe longitudinal (103) selon un angle (β) compris entre 5 et 45°.

5. Chariot à main (1) selon la revendication 4, caractérisé en ce ledit plan longitudinal (114b) dudit axe de support (12) est incliné vers l'axe longitudinal (103) selon un angle (β) compris entre 15 et 25°.

6. Chariot à main (1) selon l'une quelconque des revendications 1 à 5, caractérisé en ce ledit châssis (10) comporte, au niveau de chaque ensemble (11b) de roue arrière pivotante, une patte de support (105), où ledit axe de support (12) est fixé d'une part audit support de roue (111) et d'autre part à ladite patte de support (105) et où ladite patte de support (105) présente les mêmes inclinaisons que ledit axe de support (12).

7. Chariot à main (1) selon l'une quelconque des revendications 1 à 5, caractérisé en ce ledit châssis (10) comporte, au niveau de chaque ensemble (11b) de roue arrière pivotante, une patte de support (106), où ledit axe de support (12) est fixé d'une part audit support de roue (111) et d'autre part à ladite patte de support (106), où ladite patte de support (106) présente un axe longitudinal (106a) qui s'étend globalement verticalement et où ladite patte de support (106) s'étend dans un plan longitudinal s'étendant globalement parallèlement à l'axe longitudinal (103) dudit châssis (10) ;
où ledit axe de support (12) comporte des moyens d'inclinaison (13) configurés pour incliner ledit axe longitudinal (122) dudit axe de support (12) par rapport à ladite patte de support (106) dudit châssis (10).

8. Chariot à main (1) selon la revendication 8, caractérisé en ce lesdits moyens d'inclinaison (13) comportent une rondelle biseautée (131) disposée autour dudit axe de support (12), entre ledit support de roue (111) et ladite patte de support (106).
